Europäisches Patentamt

European Patent Office

Office européen des brevets

(11) Veröffentlichungsnummer: **0 343 147**
**A2**

## (12) EUROPÄISCHE PATENTANMELDUNG

(21) Anmeldenummer: **89890138.4**

(22) Anmeldetag: **08.05.89**

(51) Int. Cl.⁴: **F 02 M 61/16**

(30) Priorität: **16.05.88 AT 1262/88**

(43) Veröffentlichungstag der Anmeldung:
**23.11.89 Patentblatt 89/47**

(84) Benannte Vertragsstaaten:
**AT DE GB IT NL SE**

(71) Anmelder: **STEYR-DAIMLER-PUCH
AKTIENGESELLSCHAFT
Franz-Josefs-Kai 51
A-1010 Wien (AT)**

(72) Erfinder: **Priesner, Helmut, Dipl.-Ing.
Hessenplatz 4
A-4400 Steyr (AT)**

(54) **Einspritzventil für luftverdichtende Einspritzbrennkraftmaschinen.**

(57) Ein Einspritzventil (1) für luftverdichtende Einspritzbrennkraftmaschinen weist einen Düsenhalter (2), einen Düsenkörper (4) und eine Düsennadel (5) auf, wobei die Düsennadel (5) durch Kraftstoff-Druckbeaufschlagung gegen die Kraft einer in einem Federraum (6) des Düsenhalters (2) untergebrachten Schließfeder (7) betätigbar ist und mit einer Dämpfungsvorrichtung (10) zusammenwirkt, die einen kraftstoffgefüllten, in eine Drosselstelle (13, 16, 25, 28) ausmündenden Dämpferraum (12, 22) umfaßt. Der Düsennadel (5) und dem Dämpferraum (12, 22) ist ein eigener Dämpferkolben (11, 19) zwischengeordnet, welcher in den Dämpferraum (12, 22) eindringende Dämpferkolben (11, 19) mit der Düsennadel (5) kraftschlüssig in Verbindung steht. Um eine aufwandsarme und besonders wirkungsvolle Dämpfungsvorrichtung zu erreichen, bildet ein dem Federraum (6) des Düsenhalters (2) düsennadelseitig abschließendes Zwischenstück (14) den Dämpferraum (12, 22) und nimmt den im Kraftfluß zwischen Schließfeder (7) und Düsennadel (5) liegenden Dämpferkolben (11, 19) auf.

Fig. 1

Bundesdruckerei Berlin

EP 0 343 147 A2

## Beschreibung

Die Erfindung bezieht sich auf eine Einspritzventil für luftverdichtende Einspritzbrennkraftmaschinen, insbesondere Direkteinspritzmaschinen, mit Düsenhalter, Düsenkörper und Düsennadel, wobei die Düsennadel durch Kraftstoff-Druckbeaufschlagung gegen die Kraft einer in einem Federraum des Düsenhalters untergebrachten Schließfeder betätigbar ist und mit einer Dämpfungsvorrichtung zusammenwirkt, die einen kraftstoffgefüllten, in eine Drosselstelle ausmündenden Dämpferraum und einen eigenen, der Düsennadel und dem Dämpferraum zwischengeordneten Dämpferkolben umfaßt, welcher in den Dämpferraum eindringende Dämpferkolben mit der Düsennadel kraftschlüssig in Verbindung steht.

Um eine Verformung der Düsennadel und des Anschlages zu verhindern und den für den Verbrennungsvorgang und die Verbrennungsgüte mitbestimmenden zeitlichen Ablauf der eigentlichen Kraftstoffeinspritzung beeinflussen zu können, ist es bereits bekannt, Einspritzventile mit einer Dämpfungsvorrichtung mit einem eigenen Dämpferkolben auszustatten, der die Hubbewegung der Düsennadel im Öffnungssinn auf Grund der dabei erforderlichen Verdrängung der Dämpferraumfüllung durch die Drosselstelle entsprechend dämpft.

Ein derartiges Einspritzventil ist bereits aus der GB-A-664 884 bekannt. Nachteilig ist es jedoch, daß bei der bekannten Konstruktion das Einspritzventil nur mit einer speziellen Drosseldüse kombinierbar ist und nicht gestattet, konventionelle Einspritzdüsen mit einer gewünschten Dämpfungsvorrichtung auszustatten und dabei auch in rationeller Weise weitgehend übliche Bauteile zu verwenden.

Es ist auch aus der DE-A-30 41 018 ein Einspritzventil bekannt, bei dem allerdings der dem Federraum des Düsenhalters zugewandte Endbereich der die Düsennadel aufnehmenden Führungsbohrung des Düsenkörpers als Dämpferraum dient und die Düsennadel selbst als Verdränger wirkt, der den im Dämpferraum vorhandenen Kraftstoff durch die in einer Scheibe oder einem Zwischenstück zwischen Düsenkörper und Düsenhalter ausgebildete Drosselstelle in den Federraum hineindrückt. Dadurch ist nicht nur eine aufwendige Umgestaltung der üblichen Einspritzdüsenkonstruktionen und deren Bestandteilen erforderlich, sondern die Dämpfungswirkung bleibt vor allem durch die vorgegebene Dimensionierung von Düsennadel, Druckbolzen zwischen Düsennadel und Druckpilz der Schließfeder sowie Dämpferraum begrenzt. Um daher höhere Dämpferwirkungen zu erreichen, müßte die Drosselstelle extrem klein bemessen sein, was die Herstellung erschwert und wegen der bereits die Größenordnung der Drosselkraftstoffmenge erreichenden Leckverluste die Drosselung praktisch unkontrollierbar macht. Außerdem wäre bei einer konstruktiv wünschenswerten Trennung von Düsennadel und Druckbolzen ein Abheben dieser beiden Konstruktionsteile voneinander unter Verlust der Dämpfungswirkung zu befürchten. Darüber hinaus grenzt der Dämpferraum an die Fügestelle zwischen Düsenkörper und Zwischenstück od.dgl., so daß es auf Grund der hohen Dämpferraumdrücke zu Dichtheitsproblemen kommen kann. Diese bekannte Dämpfungsvorrichtung eignet sich daher auch höchstens für Einspritzventile, die zum Einsatz bei Nebenkammermotoren bestimmt sind, nicht aber für Einspritzventile von Direkteinspritzmaschinen, die mit wesentlich höheren Einspritzdrücken, geringeren Nadelhüben und oft auch niedrigeren Nenndrehzahlen arbeiten und daher auch beträchtlich höhere Dämpfungswirkungen verlangen.

Der Erfindung liegt daher die Aufgabe zugrunde, diese Mängel zu beseitigen und ein Einspritzventil der eingangs geschilderten Art zu schaffen, das verhältnismäßig einfach aufgebaut ist und sich durch eine besonders wirkungsvolle, weitgehend an die jeweiligen Verhältnisse anpaßbare Dämpfungsvorrichtung auszeichnet und die Möglichkeit mit sich bringt, konventionelle Einspritzdüsen mit einer gewünschten Dämpfungsvorrichtung auszustatten und in rationeller Weise weitgehend übliche Bauteile verwenden zu können.

Die Erfindung löst diese Aufgabe dadurch, daß ein den Federraum des Düsenhalters düsennadelseitig abschließendes Zwischenstück den Dämpferraum bildet und den im Kraftfluß zwischen Schließfeder und Düsennadel liegenden Dämpferkolben aufnimmt und daß der Federraum mit einem zwischen Dämpferkolben und Düsennadel vorgesehenen Zwischenraum durch eine das Zwischenstück durchsetzende dem Druckausgleich dienende Leitung verbunden ist oder daß eine in den Düsenhalter eingesetzte Büchse den an der düsennadelabgewandten Seite des Federraumes vorgesehenen Dämpferraum bildet und der Dämpferkolben mittels eines Druckbolzens gegen die Kraft einer Rückholfeder über den die Schließfeder an der Düsennadel abstützenden Druckpilz od.dgl. betätigbar ist.

Der Dämpferkolben und die Schließfeder sind gewissermaßen in Serie geschaltet, wobei der Dämpferkolben zwischen der Düsennadel und dem über die Schließfeder druckbelasteten Druckbolzen eingespannt ist, so daß der Dämpferraum nur die notwendigen Durchführungen für den Dämpferkolben und den Druckbolzen aufweisen muß. Das Zwischenstück kann je nach Form und Größe unmittelbar oder unter Zwischenlage eines zusätzlichen Zwischenringes an den Düsenkörper anschließen, so daß auch hinsichtlich der Ausgestaltung und Abdichtung des Überganges zwischen Düsenkörper und Zwischenstück bzw. Düsenhalter, des Düsennadelanschlages u.dgl. konstruktive Freiheiten entstehen. Die Dämpfungsvorrichtung kann bei konventionellen Einspritzdüsen eingesetzt werden, kann aus eigenständigen Bauteilen zusammengesetzt sein und es können wesentliche Teile des Einspritzventiles von üblich verwendeten Einspritzventilen unverändert übernommen werden, so daß trotz der erzielbaren besonderen Dämpfungseffekte der Fertigungsaufwand gering bleibt.

Dadurch, daß der Dämpferraum und der Dämpferkolben an der düsennadelabgewandten Seite des Federraumes mittels eines Druckbolzens gegen die Kraft einer Rückholfeder über den die Schließfeder an der Düsennadel abstützenden Druckpilz od.dgl. betätigbar sind, ergibt sich eine Parallelschaltung von Schließfeder und Dämpferkolben, was den besonderen Vorteil mit sich bringt, daß keine eigene Durchführung für den Druckbolzen durch den Dämpferraum erforderlich ist. Der gesamte Querschnitt des Dämpferkolbens trägt zur Dämpfungswirkung bei und nur der Dämpferkolben selbst ist gegenüber dem Dämpferraum abzudichten. Um die kraftschlüssige Verbindung zwischen Druckpilz und Dämpferkolben bzw. Druckbolzen sicherzustellen, ist zwar eine Rückholfeder erforderlich, doch können hier die ganze Düse und auch das Zwischenstück und Druckpilz samt Schließfeder von bekannten Einspritzventilen übernommen werden.

Die in den Düsenhalter eingesetzte, den Dämpferraum und die Drosselstelle bildende Büchse gewährleistet bei entsprechender Materialwahl unabhängig vom Material des Düsenhalters die gewünschte Verschleißfestigkeit der Dämpfungsvorrichtung.

Nach einer besonders vorteilhaften Ausgestaltung der Erfindung ist die Ausgangslage des Dämpferkolbens durch einen Anschlag vorbestimmbar, so daß der Beginn der Dämpfungswirkung eingestellt werden kann und beispielsweise ein bestimmter Teil des Nadelhubes ungedämpft erfolgt.

An und für sich kann die Drosselstelle beliebig angeordnet sein und den Dämpferraum in das unter gegebenenfalls steuerbarem Druck stehende Lecköölsystem des Motors oder auch in den leckölllosen Federraum des Düsenhalters öffnen. Dazu läßt sich die Drosselstelle einfach in den Dämpferraum bildenden Ventilteil, beispielsweise dem Zwischenstück oder der Büchse, anordnen. Erfindungsgemäß kann aber auch der Dämpferkolben selbst die Drosselstelle bilden, so daß der Dämpferraum über ein axiale Kolbenbohrung und eine radial oder axial ausmündende Drosselstelle auswärts in ein geeignetes Niederdrucksystem, beispielsweise den Zwischenraum zwischen Düsennadel und Kolbenrückseite bei Serienschaltung oder in den Federraum bei Parallelschaltung geöffnet werden kann.

In der Zeichnung ist der Erfindungsgegenstand schematisch veranschaulicht, und zwar zeigen
 Fig. 1 ein erfindungsgemäßes Einspritzventil im Axialschnitt,
 Fig. 2 ein weiteres Ausführungsbeispiel eines erfindungsgemäßen Einspritzventils ebenfalls im Axialschnitt,
 Fig. 3 einen Teil einer Ausführungsvariante des Einspritzventils gemäß Fig. 2 und
 Fig. 4 einen Ausschnitt aus Fig. 2 mit einer Ausführungsvariante.

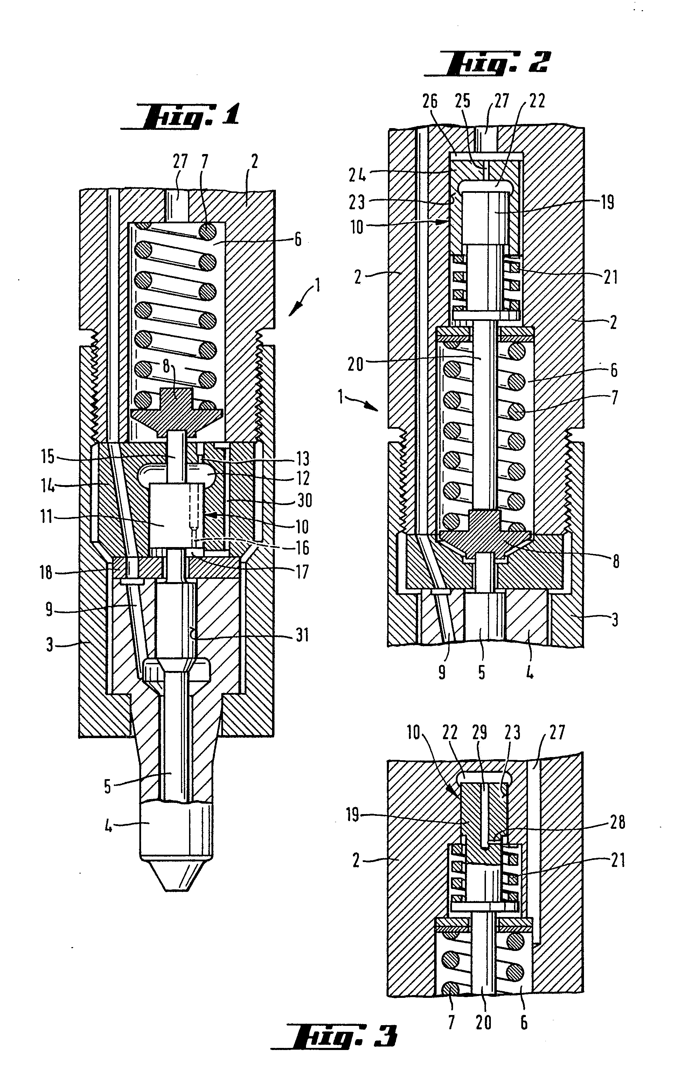

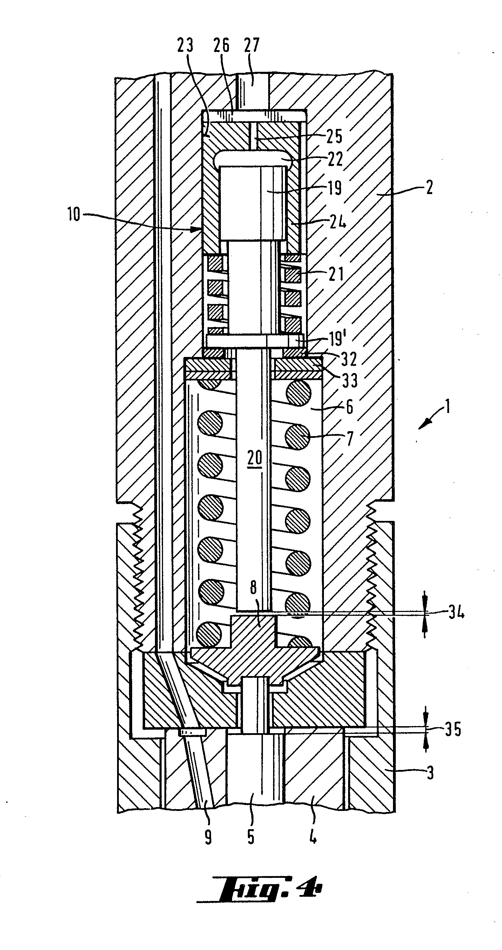

Das in Fig. 1 dargestellte Einspritzventil 1 einer luftverdichtenden Einspritzbrennkraftmaschine besteht im wesentlichen aus einem Düsenhalter 2, einem über eine Düsenspannmutter 3 am Düsenhalter 2 befestigten Düsenkörper 4 und einer im Düsenkörper 4 geführten Düsennadel 5. In einem Federraum 6 des Düsenhalters 2 ist eine Schließfeder 7 untergebracht, die sich über einen Druckpilz 8 abstützt und die Düsennadel 5 im Schließsinn belastet. Eine Kraftstoff-Druckleitung 9 führt in den Düsenkörper 4, wobei eine Kraftstoff-Druckbeaufschlagung die Düsennadel 5 gegen die Kraft der Schließfeder 7 betätigt und die Düse zur Kraftstoffeinspritzung öffnet.

Um die Öffnungsbewegung der Düsennadel 5 zu dämpfen, gibt es eine Dämpfungsvorrichtung 10, die aus einem eigenen Dämpferkolben 11 und einem Dämpferraum 12 mit einer Drosselstelle 13 besteht. Ein den Federraum 6 des Düsenhalters 2 düsennadelseitig abschließendes Zwischenstück 14 nimmt die Dämpfungsvorrichtung 10 auf, wobei der Dämpferkolben 11 im Kraftfluß zwischen Schließfeder 7 und Düsennadel 5 liegt und zwischen der Düsennadel 5 und einem über den Druckpilz 8 der Schließfeder 7 belasteten Druckbolzen 15 eingespannt ist. Es kommt zu einer Serienschaltung von Dämpferkolben 11 und Schließfeder 7. Das Zwischenstück 14 weist eine dem Druckausgleich dienende Leitung 30 auf, die den Federraum 6 mit dem Zwischenraum 17 zwischen Dämpferkolben 11 und Düsennadel 5 bzw. einem den Nadelhub begrenzenden Zwischenring 18 verbindet. Dadurch wird vermieden, daß sich im Zwischenraum 17 ein Druck aufbaut, der den Öffnungs-bzw. Schließdruck der Düsennadel 5 ungünstig beeinflußt.

Sobald sich die Düsennadel 5 hebt, dringt der Dämpferkolben 11 in den Dämpferraum 12 vor und verdrängt den im Dämpferraum vorhandenen Kraftstoff durch die Drosselstelle 13 in den Federraum 6, so daß sich eine entsprechende Dämpferwirkung für den Nadelhub ergibt. Durch den Einsatz eines eigenen Dämpferkolbens 11 als Verdrängerkörper und der Unabhängigkeit des Dämpferraumes 12 von der Führungsbohrung 31 der Düsennadel 5 läßt sich die Dämpfungsvorrichtung 10 durch freie Wahl der Bemessung des Dämpferkolbens 11 und des zugehörigen Dämpferraumes 12 einfach und rationell in ihrer Dämpfungswirkung weitreichend variieren und an unterschiedlichste Gegebenheiten anpassen. Dazu kommt, daß durch geeignete Wahl des Kolbendurchmessers bei gewünschter Dämpfungswirkung die auftretenden Drücke genügend niedrig gehalten werden können, um ein Abheben von kraftschlüssig miteinander verbundenen Konstruktionsteilen zu vermeiden. Auch der Durchmesser der Drosselstelle 13 läßt sich so groß genug halten, um deren Fertigung nicht zu erschweren. Da außerdem die Dämpfungsvorrichtung 10 aus eigenständigen Bauteilen zusammengesetzt ist, können wesentliche Teile des Einspritzventiles 1 von den bekannten Einspritzventilen unverändert übernommen werden, so daß trotz der erzielbaren besonderen Dämpfungseffekte der Fertigungsaufwand gering bleibt.

Wie strichliert angedeutet, kann auch der Dämpferkolben 11 selbst durch eine axiale Drosselbohrung 16 die Drosselstelle für den Dämpferraum 12 bilden, wodurch sich der Dämpferraum 12 in den Zwischenraum 17 zwischen Dämpferkolben 11 und Düsennadel 5 bzw. einem den Nadelhub begrenzenden Zwischenring 18 öffnet. Dieser Zwischenring 18 könnte auch mit dem Zwischenstück 14 integriert sein oder bei einer Nadelhubbegrenzung durch den Dämpferkolben 11 überhaupt fehlen.

Gemäß dem Ausführungsbeispiel nach Fig. 2 ist die Dämpfungsvorrichtung 10 zur Schließfeder 7 parallelgeschaltet und liegt an der der Düsennadel 5 abgewandten Seite des Federraumes 6 im Düsenhalter 2. Der Dämpferkolben 19 wird dabei mittels eines Druckbolzens 20 über den Druckpilz 8 der Schließfeder 7 betätigt, welcher Druckbolzen 20 mit dem Dämpferkolben 19 einteilig ausgebildet ist und auf Grund einer Rückholfeder 21 kraftschlüssig am Druckpilz 8 angreift. Der Dämpferraum 22 ist innerhalb einer in einer Düsenhalterausnehmung 23 eingesetzten Büchse 24 angeordnet und die im Büchsenboden liegende Drosselstelle 25 führt über eine Sammelnut 26 in eine Lecköuleitung 27 des Düsenhalters. Die Rückholfeder 21 ist zwischen der Büchse 24 und einem Bund des Druckbolzens 20 eingespannt, doch könnte diese Rückholfeder 21 durchaus auch im Dämpferraum 22 untergebracht sein und den Dämpferkolbenboden belasten.

Wie in Fig. 3 angedeutet, kann die in der Düsenhalterausnehmung 23 eingesetzte Büchse 24 auch fehlen und die Ausnehmung 23 selbst den Dämpferraum 22 für die Dämpfungsvorrichtung 10 bilden. In diesem Fall ist vorteilhafterweise die Drosselstelle 28 im Dämpferkolben 19 angeordnet und schließt den Dämpferraum 22 über eine axiale Kolbenbohrung 29 an den Federraum 6 an.

Unabhängig von diesen Ausführungsvarianten gibt es hier keine Druckbolzendurchführung durch den Dämpferraum 22 mehr und der gesamte Querschnitt des Dämpferkolbens 19 trägt zur Dämpferwirkung bei.

Gemäß Fig. 4, die einen Ausschnitt aus der Fig. 2 zeigt, stützt sich die Schließfeder 7 an der der Düsennadel abgewandten Seite des Federraumes 6 an einer Scheibe 33 am Düsenhalter 2 ab und Scheibe 33 bildet mit dem Distanzring 32 den Anschlag für den Dämpferkolben 19 in seiner Grundstellung, wobei der Dämpferkolben 19 mit seinem Bund 19' an dem Anschlag 32 (Distanzring) anliegt. In der Grundstellung des Dämpferrkolbens 19 weist der mit ihm zusammenwirkende Druckbolzen zum Druckpilz 8 einen Spalt 34 auf, der kleiner ist, als der durch den Ventilhub der Ventilnadel 5 bestimmte Spalt 35. Durch geeignete Wahl des Distanzringes 32 ist der Beginn der Dämpferwirkung vorbestimmbar, wobei der Spalt 34 denjenigen Teil des Nadelhubspaltes 35 bestimmt, der ungedämpft erfolgt.

Die erfindungsgemäße Dämpfungsvorrichtung 10 zeichnet sich bei verhältnismäßig geringem Bauaufwand durch ihre besonders gute Dämpferwirkung aus und eignet sich daher auch bestens zum Einsatz bei Direkteinspritzmotoren, und sie läßt sich auch mit beliebigen Einspritzventilen, seien es Einfach- oder Doppelhub-Einspritzventile, kombinieren.

## Patentansprüche

Einspritzventil (1) für luftverdichtende Einspritzbrennkraftmaschinen, insbesondere Direkteinspritzmaschinen, mit Düsenhalter (2), Düsenkörper (4) und Düsennadel (5), wobei die Düsennadel (5) durch Kraftstoff-Druckbeaufschlagung gegen die Kraft einer in einem Federraum (6) des Düsenhalters (2) untergebrachten Schließfeder (7) betätigbar ist und mit einer Dämpfungsvorrichtung (10) zusammenwirkt, die einen kraftstoffgefüllten, in eine Drosselstelle (13, 16, 25, 28) ausmündenden Dämpferraum (12, 22) und einen eigenen, der Düsennadel (5) und dem Dämpferraum (12, 22) zwischengeordneten Dämpferkolben (11, 19) umfaßt, welcher in den Dämpferraum (12, 22) eindringende Dämpferkolben (11, 19) mit der Düsennadel (5) kraftschlüssig in Verbindung steht, **dadurch gekennzeichnet**, daß ein den Federraum (6) des Düsenhalters (2) düsennadelseitig abschließendes Zwischenstück (14) den Dämpferraum (12) bildet und den im Kraftfluß zwischen Schließfeder (7) und Düsennadel (5) liegenden Dämpferkolben (11) aufnimmt und daß der Federraum (6) mit einem zwischen Dämpferkolben (11) und Düsennadel (5) vorgesehenen Zwischenraum (17) durch eine das Zwischenstück (14) durchsetzende dem Druckausgleich dienende Leitung (30) verbunden ist oder daß eine in den Düsenhalter (2) eingesetzte Büchse (23) den an der düsennadelabgewandten Seite des Federraumes (6) vorgesehenen Dämpferraum (22) bildet und der Dämpferkolben (19) mittels eines Druckbolzens (20) gegen die Kraft einer Rückholfeder (21) über den die Schließfeder (6) an der Düsennadel (5) abstützenden Druckpilz (8) od.dgl. betätigbar ist.

2. Einspritzventil nach Anspruch 1, **dadurch gekennzeichnet**, daß die Ausgangslage des Dämpferkolbens (19) durch einen Anschlag 32 vorbestimmbar ist.

3. Einspritzventil nach Anspruch 1 oder 2, **dadurch gekennzeichnet**, daß der Dämpferkolben (11, 19) selbst die Drosselstelle (16, 28) bildet.

Fig. 1

Fig. 2

Fig. 3

Fig. 4